# EUROPEAN PATENT APPLICATION

(11) **EP 1 106 636 A1**
(43) Date of publication of application: **13.06.2001**
(21) Application number: 00125275.8
(22) Date of filing: 27.11.2000
(51) Int. Cl.: C08G 18/38, C08G 18/62, C08G 18/79, C09D 175/04, C09D 133/00

(54) **Two-component coating compositions having improved scratch resistance**

(30) Priority: 08.12.1999 US 456926
(71) Applicant: Bayer Corporation, Pittsburgh, PA 15205-9741 (US)
(72) Inventor: Jacobs, Patricia B., Pittsburg, PA 15214 (US); Sylvester, Robert Anthony, Carnegie, PA 15106 (US)
(74) Representative: Feldhues, Michael L.F., Dr.

(57) **Abstract**

The present invention relates to a two-component coating composition containing
a) a compound having at least two isocyanate-reactive groups and
b) a crosslinker mixture containing
   i) a polyisocyanate having free isocyanate groups, which is present in an amount sufficient to provide an equivalent ratio of isocyanate groups to isocyanate-reactive groups of component a) of 0.2:1 to 2:1, and
   ii) 1 to 50% by weight, based on the weight of component a), of an aminoplast resin containing active methylol or methylalkoxy groups.
The present invention also relates to a substrate coated with this two-component coating composition.

## Description

### BACKGROUND OF THE INVENTION

### Field of the Invention

The present invention relates to two-component coating compositions and to the coatings prepared therefrom that possess both good acid etch resistance and good early scratch resistance.

### Description of the Prior Art

There is a need in the automotive industry for topcoats possessing both acid etch resistance and scratch resistance. One known prior art system is a one-component composition containing a high molecular weight polyol, generally a polyester or polyacrylate, and a melamine crosslinker. While coatings prepared from these compositions possess many desirable properties, they do not possess good acid etch resistance. Another known prior art system is a one-component composition containing a high molecular weight polyol, generally a polyester or polyacrylate, and a blocked polyisocyanate crosslinker. While coatings prepared from these compositions possess good acid etch resistance, they do not possess good scratch resistance, especially early scratch resistance. Two-component polyurethane coating compositions containing the same polyol and an unblocked polyisocyanate suffer from the same deficiencies as one-component polyurethane coating compositions.

Accordingly, it is an object of the present invention to provide coating compositions that possess both acid etch resistance and scratch resistance, especially early scratch resistance.

This object may be achieved with the two-component coating compositions according to the present invention which contain a high molecular weight polyol and a crosslinker mixture containing an unblocked polyisocyanate and a melamine resin.

The prior art does not describe the mixture of crosslinking agents required by the present invention. U.S. Patents 5,187,199, 5,424,009 and 5,342,888 describe mixtures of blocked polyisocyanates and melamine resins as crosslinking agents. One-component coating compositions containing either blocked polyisocyanates or melamine resins are cured at elevated temperatures. To the contrary two-component coating compositions based on unblocked polyisocyanates may be cured at room temperature. Because melamine resins must be cured at elevated temperatures, the prior art only discloses their use in combination with blocked polyisocyanates, which must also be cured at elevated temperatures.

### SUMMARY OF THE INVENTION

The present invention relates to a two-component coating composition containing
a) a compound having at least two isocyanate-reactive groups and
b) a crosslinker mixture containing
   i) a polyisocyanate having free isocyanate groups, which is present in an amount sufficient to provide an equivalent ratio of isocyanate groups to isocyanate-reactive groups of component
      a) of 0.2:1 to 2:1, and
   ii) 1 to 50% by weight, based on the weight of component a), of an aminoplast resin containing active methylol or methylalkoxy groups.

The present invention also relates to a substrate coated with this two-component coating composition.

### DETAILED DESCRIPTION OF THE INVENTION

Suitable polyisocyanates for use in preparing polyisocyanates b-i) include the monomeric polyisocyanates and polyisocyanate adducts known from polyurethane chemistry. The monomeric polyisocyanates preferably have a molecular weight of 168 to 300, and more preferably have aliphatically and/or cycloaliphatically bound isocyanate groups. Examples include 1,6-hexamethylene diisocyanate, 1,4-butane diisocyanate, 2,2,4- and/or 2,4,4-trimethyl-1,6-hexamethylene diisocyanate, dodecamethylene diisocyanate, cyclohexane-1,3- and -1,4-diisocyanate, 1-isocyanato-2-isocyanatomethyl cyclopentane, 1-isocyanato-3-isocyanato-methyl-3,5,5-trimethyl-cyclohexane (isophorone diisocyanate or IPDI), bis-(4-isocyanatocyclohexyl)-methane (HMDI), 1,3- and 1,4-bis-(isocyanatomethyl)-cyclohexane, bis-(4-isocyanato-3-methyl-cyclohexyl)-methane, xylylene diisocyanate, α,α,α',α'-tetramethyl-1,3- and/or-1,4-xylylene diisocyanate, 1-isocyanato-1-methyl-4(3)-isocyanatomethyl cyclohexane, and 2,4- and/or 2,6-hexahydrotoluylene diisocyanate.

Also suitable, although less preferred, are aromatic polyisocyanates such as 2,4'- and/or 4,4'-diisocyanatodiphenyl methane and mixtures of these isomers with their higher homologs which are obtained in known manner by the phosgenation of aniline/formaldehyde condensates, 2,4- and/or 2,6-diisocyanatotoluene and mixtures of these compounds. If used, the aromatic polyisocyanates are preferably used in an amount of up to 40 weight percent, more preferably up to 20 weight percent, based on the weight of the polyisocyanates. Most preferably, aromatic polyisocyanates are not used.

Instead of the previously mentioned monomeric diisocyanates, it is preferred in accordance with the present invention to use the known polyisocyanate adducts prepared from these monomeric polyisocyanates to prepare the blocked polyisocyanates. These polyisocyanate adducts include polyisocyanates containing biuret groups as described, for example, in US-PS 3,124,605, US-PS 3,201,372 and DE-OS 1,101,394; polyisocyanates containing isocyanurate groups as described, for example, in US-PS 3,001,973, DE-PS 1,022,789, 1,222,067 and 1,027,394 and DE-OS 1,929,034 and 2,004,048; polyisocyanates containing uretdione groups and prepared by oligomerizing a portion of the isocyanate groups of a diisocyanate in the presence of a trialkyl phosphine catalyst; polyisocyanates containing oxadiazinetrione groups and containing the reaction product of two moles of a diisocyanate and one mole of carbon dioxide; polyisocyanates containing urethane groups as described, for example, in DE-OS 953,012, BE-PS 752,261 and US-PS 3,394,164 and 3,644,457; polyisocyanates containing carbodiimide groups as described in DE-PS 1,092,007, US-PS 3,152,162 and DE-OS 2,504,400, 2,537,685 and 2,552,350; polyisocyanates containing allophanate groups as described, for example, in GB-PS 994,890, BE-PS 761,626 and NL-OS 7,102,524; polyisocyanates containing allophanate and isocyanurate groups as described, for example, in copending applications, U.S. Serial Nos. 07/644,174, 07/733,549 and 07/733,566, the disclosures of which are herein incorporated by reference; and polyisocyanates containing iminooxadiazine dione and optionally isocyanurate group-containing polyisocyanates which may be prepared in the presence of special fluorine-containing catalysts as described in DE-A 19611849.

Preferred polyisocyanate adducts are the biuret group-containing polyisocyanates prepared from 1,6-hexamethylene diisocyanate, the isocyanurate group-containing polyisocyanates prepared from 1,6-hexamethylene diisocyanate and/or isophorone diisocyanate, polyisocyanate adducts containing allophanate groups and isocyanurate groups, especially those prepared from 1,6-hexamethylene diisocyanate and polyisocyanate adducts containing iminooxadiazine dione and optionally isocyanurate groups.

Component b-ii) is selected from aminoplast resins containing active methylol or methylalkoxy groups. Examples include phenol/formaldehyde adducts, melamine formaldehyde resins (more commonly referred to as melamine resins, including monomeric or polymeric melamine resins and partially or fully alkylated melamine resins), urea resins (e.g., methylol ureas such as urea formaldehyde resins and alkyoxy ureas such as butylated urea formaldehyde resins), N-methylol acrylamide emulsions, isobutoxy methyl acrylamide emulsions. Preferred are aminoplast resins such as melamine formaldehyde resins or urea formaldehyde resins, more preferably the partially or fully alkylated melamine resins.

Examples of the preferred alkyl-etherified melamine resins include alkoxymethylmelamine resins in which the alkoxy group is a methoxy, ethoxy, n-butoxy or isobutoxy group, such as methylated, ethylated, n-butylated or isobutylated melamine resins. There resins are normally obtained by reacting melamine with an aldehyde such as formaldehyde or paraformaldehyde by an addition reaction or an addition condensation reaction and then etherifying the reaction product with a monohydric alcohol having from 1 to 4 carbon atoms.

The alkyl-etherified melamine resins, which can be prepared as described in U.S. Patent 4,789,707, have a number average molecular weight of 400 to 1200, preferably 600 to 1000. If the molecular weight is less than 400, the amount of low molecular weight components in the melamine resin becomes large and the final coating composition has an increased content of volatile components. If the molecular weight is greater than 1200, the coating composition has a decreased solids content which results in coatings having a poorer appearance.

To prepare the two-component coating compositions according to the present invention the crosslinking mixture is blended with known high molecular weight compounds a) containing isocyanate-reactive groups, preferably hydroxyl groups, and optionally with low molecular weight isocyanate-reactive compounds. Examples of the high molecular weight compounds include polyester polyols, polyether polyols, polyhydroxy polycarbonates, polyhydroxy polyacetals, polyhydroxy polyacrylates, polyhydroxy polyester amides and polyhydroxy polythioethers. The polyester polyols, polyhydroxy polycarbonates and polyhydroxy polyacrylates are preferred, especially the polyhydroxy polyacrylates and blends thereof with polyester polyols. With the exception of the polyhydroxy polyacrylates, these compounds contain at least 2, preferably 2 to 15 and more preferably 2 to 6 hydroxyl groups, and have a molecular weight of 400 to 6,000, preferably 800 to 3,000. The molecular weights are number average molecular weights (Mₙ) and are determined by end group analysis (OH number).

The polyhydroxy polyacrylates have an average hydroxy functionality of at least 4, preferably 4 to 200 and more preferably 7 to 100, and an equivalent weight (determined by end group analysis) of at least 200, preferably 200 to 5000, more preferably 200 to 2500 and most preferably 200 to 1000.

Suitable polyester polyols include reaction products of polyhydric, preferably dihydric alcohols to which trihydric alcohols may be added and polybasic, preferably dibasic carboxylic acids. Instead of these polycarboxylic acids, the corresponding carboxylic acid anhydrides or polycarboxylic acid esters of lower alcohols or mixtures thereof may be used for preparing the polyesters. The polycarboxylic acids may be aliphatic, cycloaliphatic, aromatic and/or heterocyclic and they may be substituted, e.g. by halogen atoms, and/or unsaturated. The following are mentioned as examples: succinic acid; adipic acid; suberic acid; azelaic acid; sebacic acid; phthalic acid; isophthalic acid; trimellitic acid; phthalic acid anhydride; tetrahydrophthalic acid anhydride; hexahydrophthalic acid anhydride; tetrachlorophthalic acid anhydride, endomethylene tetrahydrophthalic acid anhydride; glutaric acid anhydride; maleic acid; maleic acid anhydride; fumaric acid; dimeric and trimeric fatty acids such as oleic acid, which may be mixed with monomeric fatty acids; dimethyl terephthalates and bis-glycol terephthalate. Suitable polyhydric alcohols include, e.g. ethylene glycol; propylene glycol-(1,2) and -(1,3); butylene glycol-(1,4) and -(1,3); hexanediol-(1,6); octanediol-(1,8); neopentyl glycol; cyclohexanedimethanol (1,4-bis-hydroxymethylcyclohexane); 2-methyl-1,3-propanediol; 2,2,4-trimethyl-1,3-pentanediol; triethylene glycol; tetraethylene glycol; polyethylene glycol; dipropylene glycol; polypropylene glycol; dibutylene glycol and polybutylene glycol, glycerine, trimethylolpropane, 1,2,6-hexane triol, 1,2,4-butane triol, trimethylol ethane, pentaerythritol, mannitol, sorbitol, sucrose, hydroquinone and 1,1,1-or 1,1,2- tris-(hydroxylphenyl)-ethane. The polyesters may also contain a portion of carboxyl end groups. Polyesters of lactones, e.g., ε-caprolactone or hydroxycarboxylic acids, e.g. γ-hydroxycaproic acid, may also be used.

Polycarbonates containing hydroxyl groups include those known such as the products obtained from the reaction of diols such as propanediol-(1,3), butanediol-(1,4) and/or hexanediol-(1,6), diethylene glycol, triethylene glycol or tetraethylene glycol with phosgene, diarylcarbonates such as diphenylcarbonate or with cyclic carbonates such as ethylene or propylene carbonate. Also suitable are polyester carbonates obtained form the above-mentioned polyesters or polylactones with phosgene, diaryl carbonates or cyclic carbonates.

The polyhydroxy polyacrylates preferably have at least two alcoholic hydroxyl groups per molecule as a statistical average, although a small portion of monohydroxyl compounds may be present. The polyhydroxy polyacrylates may be prepared by known methods such as those described in European Patent Office Publication 68,383, German Patentschrift 2,460,329, British Patent 1,515,868, U.S. Patent 3,002,959, U.S. Patent 3,375,227 or German Auslegeschrift 1,038,754. The polyhydroxy polyacrylates are generally prepared by the radical polymerization or copolymerization of a hydroxyalkyl ester of an unsaturated carboxylic acid, preferably acrylic or methacrylic acid, with itself or preferably together other hydroxyl-free unsaturated monomers.

Suitable hydroxylalkyl esters include esters containing 2 to 8, preferably 2 to 4 carbon atoms in the alkyl group and obtained from α,β- unsaturated carboxylic acids having 3 to 5 carbon atoms, such as acrylic, methacrylic, fumaric, maleic, itaconic or crotonic acid. The acrylic and methacrylic acid esters are preferred. Hydroxyalkyl esters of the above-mentioned acids containing ether bridges in the alkyl groups may also be used but are less preferred. The particularly preferred monomers with alcoholic hydroxyl groups include the 2-hydroxyethyl-, 2- and 3-hydroxypropyl-, and 2-, 3- and 4-hydroxybutyl-acrylates and -methacrylates. These monomers containing alcoholic hydroxyl groups may be prepared, for example, by the reaction of the above-mentioned acids with epoxides such as alkylene or propylene oxide.

The polyhydroxy polyacrylates may also be prepared by reacting the corresponding polyacrylates containing carboxylic acid groups with alkylene oxides such as propylene oxide and/or ethylene oxide in the presence of suitable alkoxylation catalysts such as tetrabutylammonium bromide. The starting materials for this alkoxylation reaction, i.e., the polyacrylates containing carboxylic acid groups, are obtained in known manner by the copolymerization of unsaturated carboxylic acids such as acrylic acid and/or methacrylic acid with unsaturated comonomers which do not contain carboxyl or hydroxyl groups. The preferred method for preparing the polyhydroxy polyacrylates is the copolymerization of the hydroxyalkyl esters of unsaturated carboxylic acids previously set forth.

The comonomers used for the above-mentioned hydroxyl group-containing monomers may be any α,β-olefinically unsaturated compounds in the molecular weight range of 28 to 350 which are free from hydroxyl groups such as ethylene, propylene, butene-1, hexene-1, octene-1, styrene, α-methyl-styrene, divinyl benzene, various isomeric vinyl toluenes, esters of α,β-unsaturated carboxylic acids of the type exemplified above monohydric aliphatic alcohols having 1 to 18, preferably 1 to 10 carbon atoms, in particular the corresponding esters of acrylic or methacrylic acids such as the methyl, ethyl, N-butyl, N-pentyl, N-hexyl, 2-ethylhexyl or octadecyl esters of acrylic or methacrylic acid.

Neutral esters of polycarboxylic acids are also suitable comonomers, for example, itaconic, crotonic, maleic or fumaric esters of the monohydric alcohols exemplified above.

Acrylic acid, methacrylic acid, vinyl acetate, acrylonitrile, methacrylonitrile and dienes such as isoprene or butadiene are all suitable comonomers. Vinyl chloride may in principle also be used as a comonomer.

Particularly preferred polyhydroxy polyacrylates are obtained from about 10 to 50 parts by weight of hydroxyalkyl esters of acrylic or methacrylic acid, 0 to 80 parts by weight of styrene and/or α-methylstyrene, about 10 to 90 parts by weight of an acrylic and/or methacrylic acid ester free from hydroxyl group of the type exemplified above and 0 to about 5 parts by weight of an α,β-unsaturated mono- or dicarboxylic acid of the type exemplified, in particular acrylic acid or methacrylic acid.

The compositions may also contain a low molecular weight isocyanate-reactive component having an average molecular weight of up to 400. The low molecular weight compounds include the polyhydric alcohols which have been described for the preparation of the polyester polyols and also the low molecular weight polyamines which are known from polyurethane chemistry, e.g., the secondary diamines described in U.S. Patent 5,126,170, herein incorporated by reference.

The amounts of polyisocyanate b-i) and polyhydroxy compounds a) are selected to provide an equivalent ratio of isocyanate groups to isocyanate-reactive groups of 0.2:1 to 2:1, preferably 0.5:1 to 2:1, more preferably 0.8:1 to 1.5:1 and most preferably about 0.9:1 to 1.2:1. The aminoplast resin is present in an amount of 1 to 50% by weight, preferably 10 to 40% by weight and more preferably 15 to 30% by weight, based on the weight of component a).

To accelerate hardening, the coating compositions may contain known polyurethane catalysts, e.g., tertiary amines such as triethylamine, pyridine, methyl pyridine, benzyl dimethylamine, N,N-dimethylamino cyclohexane, N-methyl-piperidine, pentamethyl diethylene triamine, 1,4-diaza-bicyclo[2,2,2]-octane and N,N'-dimethyl piperazine; or metal salts such as iron(III)-chloride, zinc chloride, zinc-2-ethyl caproate, tin(II)-ethyl caproate, dibutyltin(IV)-dilaurate and molybdenum glycolate. However, these catalysts do not significantly catalyze the reaction of the aminoplast resins. Strong acid catalysts, such as para-toluene sulfonic acid, also work in these systems. To catalyze both the urethane-forming reaction and the reaction of the aminoplast resins, it is preferred to use the tin catalysts described in U.S. Patent 5,981,685. Examples include PL6701A and PE1042, which are available from Atochem.

The coating compositions may also contain other additives such as pigments, dyes, fillers, leveling agents and solvents. The coating compositions may be applied to the substrate to be coated in solution or from the melt by conventional methods such as painting, rolling, pouring or spraying.

The two-component coating compositions containing the mixture of crosslinking agents according to the invention may be applied in known manner directly to various substrates, preferably metal substrates, or may be applied in known manner, optionally wet-on-wet, to primers or basecoats.

The coatings obtained from the two-component compositions of the present invention possess an improved combination of acid etch resistance and early scratch resistance in addition to the other valuable properties of polyurethane coatings, i.e., they are particularly light-fast and color-stable in the presence of heat, very resistant to abrasion and characterized by high hardness, elasticity, very good resistance to chemicals, high gloss, excellent weather resistance and good pigmenting qualities.

The invention is further illustrated, but is not intended to be limited by the following examples in which, unless otherwise specified, all percentages are by weight, all amounts set forth in the tables are in grams and the NCO/OH equivalent ratio is 1.1:1.0. Isocyanate contents and equivalents weights are based on the weight of the solution unless otherwise specified.

### EXAMPLES

### Polyisocyanate I

An isocyanurate group-containing polyisocyanate prepared from 1,6-hexamethylene diisocyanate and having an isocyanate content of 21.6% by weight, a content of monomeric diisocyanate of <0.2% and a viscosity at 20°C of 3000 mPa.s.

### Polyisocyanate II

An isocyanurate group-containing polyisocyanate present as a 70% solution in Aromatic 100 solvent, prepared from isophorone diisocyanate and having an isocyanate content of 11.5% by weight, a content of monomeric diisocyanate of <0.5% and a viscosity at 20°C of 1300 to 2700 mPa.s.

### Polyisocyanate III

An isocyanurate group-containing polyisocyanate present as a 70% solution in a 1:1 mixture of Aromatic 100 solvent and butylacetate, prepared from isophorone diisocyanate and having an isocyanate content of 11.9% by weight, a content of monomeric diisocyanate of <0.5% and a viscosity at 20 °C of 1000 to 2000 mPa.s.

### Polyisocyanate IV

A blend of 63.3% Polyisocyanate 2, 22.7% Polyisocyanate 1 and 14% diisobutyl ketone.

### Polyol I

A polyacrylate polyol having an OH equivalent weight of 567, an OH content of 2.8% and an acid number of <10, present as a 70% solution in butyl acetate, and prepared from 38.6% styrene, 32.4% hydroxyethyl methacrylate, 24.0% butylacrylate, 1.0% acrylic acid and 4.0% di-tert.-butyl peroxide.

### Polyol 2

A polyacrylate polyol having an OH equivalent weight of 607, an OH content of 2.8% and an acid number of 5, present as a 75% solution in xylene, and prepared from 0.7% liquid polybutadiene, 28.6% 2-hydroxyethylmethacrylate, 21.7% styrene, 18.8% butyl acrylate, 0.7% acrylic acid, 1.1% n-dodecyl mercaptan, 3.0% di-tert-butylperoxide, and 25.3 % ε-caprolactone, and 0.1% stannous dioctoate.

### Melamine 1

A highly methylated/butylated melamine with a 60% monomer content, a 1.4 degree of polymerization, an equivalent weight of 90 to 200 and a solids content of 98% (available as Resimine 755 from Solutia).

### Melamine 2

A highly methylated melamine with 1.75 degree of polymerization, an equivalent weight of 130 to 190 and a solids content of 98% (available as Cymel 303 from Cytec).

### Melamine 3

A moderately methylated/butylated melamine with a 38% monomer content, a 2.0 degree of polymerization, an equivalent weight of 110 to 190 and a solids content of 94% solids (available as Resimine CE 4514 from Solutia).

### Solvent Blend 1

A 3:2:1:1 blend of butyl acetate, methylisobutyl ketone, Aromatic 100 solvent and methylamyl ketone.

### Solvent Blend 2

A 1:1:1 blend of butyl acetate, propylene glycol monomethyl ether acetate.

### Solvent Blend 3

A 4:3:6 blend of butyl acetate, propylene glycol monomethyl ether acetate and ethyl monoethylether propionate.

### Catalyst A

Dibutyltin dilaurate (available as Metacure T-12 from Air Products and Chemicals), present as a 10% solution in propylene glycol monomethyl ether acetate.

### Catalyst B

A tin-based catalyst (available as PE1042 from Elf Atochem), present as a 10% solution N-methyl pyrrolidone.

### Catalyst C

A tin-based catalyst (available as PL6701A from Elf Atochem), present as a 10% solution N-methyl pyrrolidone.

### Catalyst B

Catalyst containing polystannoxane salts having an organosulfonate group (available as PE1042 from Elf Atochem), present as a 10% solution N-methyl pyrrolidone.

### Catalyst C

Catalyst containing polystannoxane salts having an organosulfonate group (available as PL6701A from Elf Atochem), present as a 10% solution N-methyl pyrrolidone.

### Catalyst D

Para-toluene sulfonic acid, present as a 10% solution in butyl acetate.

### Additive 1

A hindered amine light stabilizer (available as Tinuvin 292 from Ciba-Geigy).

### Additive 2

A benzotriazole light stabilizer (available as Tinuvin 1130 from Ciba-Geigy).

### Additive 3

An acrylate copolymer (available as Byk 358 from Byk Chemie).

### Additive 4

A polyether modified polydimethyl siloxane (available as Byk 300 from Byk Chimie).

### General Procedure

Clearcoat formulations were sprayed over 10" x 10" e-coated steel panels (for testing etch resistance) or 4" x 6" cold rolled steel panels (for testing scratch resistance), which had previously been coated with a black base coat.

| **Comparison Example 1 and Example 2 according to the invention** | | |
|---|---|---|
| Part 1 | Ex. 1 (Comp.) | Ex. 2 |
| Polyol 1 | 20.6 | 20.6 |
| Melamine 1 | - | 4.3 |
| Additive 3 | 0.3 | 0.3 |
| Catalyst B | 1.1 | 1.1 |
| Solvent Blend 1 | 10.0 | 9.0 |

| Part 2 | | |
|---|---|---|
| Polyisocyanate 4 | 13.9 | 13.9 |

Part 2 was mixed into Part 1 by hand and the resulting composition was sprayed over prepared steel panels, flashed off for 5 minutes and baked at 121°C for 30 minutes.

| **Comparison Example 3 and Example 4 according to the invention** | | |
|---|---|---|
| Part 1 | Ex. 3 (Comp) | Ex. 4 |
| Polyol 2 | 39.6 | 40.8 |
| Melamine 1 | - | 8.6 |
| Additive 4 | 0.3 | 0.3 |
| Catalyst A | 0.2 | 0.2 |
| Catalyst B | - | 1.5 |
| Solvent Blend 1 | 23.7 | 21.1 |

| Part 2 | | |
|---|---|---|
| Polyisocyanate 1 | 7.9 | 8.4 |
| Polyisocyanate 2 | 11.3 | 12.0 |

Part 2 was mixed into Part 1 by hand and the resulting composition was sprayed over prepared steel panels, flashed off for 5 minutes and baked at 129°C for 30 minutes.

| **Comparison Example 5 and Examples 6 and 7 according to the invention** | | | |
|---|---|---|---|
| Part 1 | Ex. 5 (Comp) | Ex.6 | Ex.7 |
| Polyol 1 | 40.8 | 40.8 | 40.8 |
| Melamine 1 | - | 5.7 | - |
| Melamine 2 | | | 8.4 |
| Additive 4 | 0.3 | 0.3 | 0.3 |
| Catalyst A | 0.2 | 0.2 | 0.2 |
| Catalyst B | - | 1.4 | 1.5 |
| Solvent Blend 1 | 21.1 | 21.1 | 21.1 |

| Part 2 | | | |
|---|---|---|---|
| Polyisocyanate 1 | 8.4 | 8.4 | 8.4 |
| Polyisocyanate 2 | 12.0 | 12.0 | 12.0 |

Part 2 was mixed into Part 1 by hand and the resulting composition was sprayed over prepared steel panels, flashed off for 5 minutes and baked at 129°C for 30 minutes.

| **Comparison Example 8 and Example 9 according to the invention** | | |
|---|---|---|
| Part 1 | Ex. 8 (Comp) | Ex. 9 |
| Polyol 1 | 40.8 | 40.8 |
| Melamine 3 | 8.6 | - |
| Additive 4 | 0.2 | 0.2 |
| Catalyst A | 0.2 | 0.2 |
| Catalyst B | - | 1.5 |
| Solvent Blend 1 | 21.1 | 21.1 |

| Part 2 | | |
|---|---|---|
| Polyisocyanate 1 | 8.4 | 8.4 |
| Polyisocyanate 2 | 12.0 | 12.0 |

Part 2 was mixed into Part 1 by hand and the resulting composition was sprayed over prepared steel panels, flashed off for 5 minutes and baked at 129°C for 30 minutes.

### Scratch resistance

Scratch resistance was evaluated using an Atlas AATCC Crockmeter, model CM-5 (Atlas Electric Devices Company, Chicago, IL). The basecoat/clear coat panels measuring 4"x6" were prepared as described in the examples. A foam pad, about 1.75" long by 1.5" wide by 0.75" deep was applied to the acrylic finger on the Crockmeter. For each test, a fresh piece of linen cloth the size of the pad was applied to the bottom of the foam pad. Bon Ami Cleanser was applied to each coated panel and the excess tapped off, leaving a thin powder film of cleanser on the panel. The panels were mounted on the Crockmeter which was set for 10 back and forth rubs. After rubbing, the panels were washed with water to remove cleanser, and carefully dried. Mar resistance was determined by 20° gloss retention (gloss reading after rubbing divided by gloss reading before rubbing times 100). The reported gloss reading is the average of 3 readings from each of the duplicate panels.

| Example | Scratch resistance 1 hr | Scratch resistance 24 hr | Scratch resistance 1 wk |
|---|---|---|---|
| 1 (Comp) | 67% | 71% | 60% |
| 2 | 81% | 84% | 75% |
| 3 (Comp) | | 66% | 63% |
| 4 | | 86% | 89% |
| 5 (Comp) | | 65% | 68% |
| 6 | | 86% | 79% |
| 7 | | 90% | 89% |
| 8 (Comp) | | 54% | 47% |
| 9 | | 80% | 77% |

| **Comparison Examples 10, 13, 14 and Examples 11 and 12 according to the invention** | | | | | |
|---|---|---|---|---|---|
| Part 1 | Ex. 10 (Comp) | Ex. 11 | Ex. 12 | Ex. 13 (Comp) | Ex. 14 (Comp) |
| Polyol 1 | 40.8 | 39.6 | 39.6 | 55.0 | 55.0 |
| Melamine 1 | - | 8.3 | 4.2 | 11.6 | - |
| Melamine 2 | - | - | - | - | 11.6 |
| Additive 4 | 0.3 | 0.3 | 0.3 | 0.3 | 0.3 |
| Catalyst A | 0.2 | 0.2 | 0.2 | - | - |
| Catalyst B | 1.5 | 2.1 | 2.1 | - | - |
| Catalyst D | - | - | - | 0.5 | 0.5 |
| Additive B | 0.6 | 0.6 | 0.6 | 0.9 | 0.9 |
| Additive A | 0.3 | 0.3 | 0.3 | 0.4 | 0.4 |
| Solvent Blend 2 | 21.1 | 21.1 | 21.1 | | |
| Solvent Blend 3 | - | - | - | 31.3 | 31.3 |

| Part 2 | | | | | |
|---|---|---|---|---|---|
| Polyisocyanate 1 | 8.2 | 8.2 | 8.4 | - | - |
| Polyisocyanate 3 | 11.6 | 11.6 | 12.0 | - | - |

Part 2 was mixed into Part 1 by hand and the resulting composition was sprayed over prepared steel panels and flashed off for 5 minutes before baking. Example 10 was baked at 121°C for 30 min and Examples 11-14 were baked at 129°C for 30 min.

### Environmental Etch Resistance

Environmental etch resistance ratings were measured after exposing panels to direct sunlight in Jacksonville, Florida for 14 weeks. Etch resistance ratings were measured visually on a scale of 1 to 10. A rating of 10 represents severe etching.

| Example | Etch Resistance |
|---|---|
| 10 comparison | 4.0 |
| 11 | 4.3 |
| 12 | 4.6 |
| 13 comparison | 8.0 |
| 14 comparison | 7.0 |

Although the invention had been described in detail in the foregoing for the purpose of illustration, it was to be understood that such detail was solely for that purpose and that variations can be made therein by those skilled in the art without departing from the spirit and scope of the invention except as it may be limited by the claims.

## Claims

1. A two-component coating composition comprising
a) a compound having at least two isocyanate-reactive groups and
b) a crosslinker mixture comprising
i) a polyisocyanate having free isocyanate groups, which is present in an amount sufficient to provide an equivalent ratio of isocyanate groups to isocyanate-reactive groups of component
a) of 0.2:1 to 2:1, and
ii) 1 to 50% by weight, based on the weight of component a), of an aminoplast resin containing active methylol or methylalkoxy groups.

2. The two-component coating composition of Claim 1 wherein polyisocyanate b-i) is present in an amount sufficient to provide an equivalent ratio of isocyanate groups to isocyanate-reactive groups of component a) of about 0.5 to 2, and aminoplast resin b-ii) is present in an amount of 10 to 40% by weight, based on the weight of component a).

3. The two-component coating composition of Claim 1 wherein polyisocyanate b-i) contains aliphatically and/or cycloaliphatically bound isocyanate groups.

4. The two-component coating composition of Claim 2 wherein polyisocyanate b-i) contains aliphatically and/or cycloaliphatically bound isocyanate groups.

5. The two-component coating composition of Claim 1 wherein component b-ii) comprises a partially or fully alkylated melamine resin.

6. The two-component coating composition of Claim 2 wherein component b-ii) comprises a partially or fully alkylated melamine resin.

7. The two-component coating composition of Claim 3 wherein component b-ii) comprises a partially or fully alkylated melamine resin.

8. The two-component coating composition of Claim 4 wherein component b-ii) comprises a partially or fully alkylated melamine resin.

9. The two-component coating composition of Claim 1 wherein component a) comprises a polyacrylate polyol.

10. The two-component coating composition of Claim 2 wherein component a) comprises a polyacrylate polyol.

11. The two-component coating composition of Claim 3 wherein component a) comprises a polyacrylate polyol.

12. The two-component coating composition of Claim 4 wherein component a) comprises a polyacrylate polyol.

13. The two-component coating composition of Claim 5 wherein component a) comprises a polyacrylate polyol.

14. The two-component coating composition of Claim 6 wherein component a) comprises a polyacrylate polyol.

15. The two-component coating composition of Claim 7 wherein component a) comprises a polyacrylate polyol.

16. The two-component coating composition of Claim 8 wherein component a) comprises a polyacrylate polyol.

17. A substrate coated with the two-component coating composition of Claim 1.
